Europäisches Patentamt

European Patent Office

Office européen des brevets

(19)

(11) Veröffentlichungsnummer: **0 451 689 A2**

## (12) EUROPÄISCHE PATENTANMELDUNG

(21) Anmeldenummer: 91105287.6

(51) Int. Cl.⁵: **G01F 23/28**

(22) Anmeldetag: **03.04.91**

(30) Priorität: **11.04.90 DE 4011651**

(43) Veröffentlichungstag der Anmeldung:
**16.10.91 Patentblatt 91/42**

(84) Benannte Vertragsstaaten:
**AT CH DE FR GB IT LI**

(71) Anmelder: **Braun Aktiengesellschaft**

**W-6000 Frankfurt am Main(DE)**

(72) Erfinder: **Littmann, Ludwig
Hardtgrundweg 26
W-6240 Königstein 3(DE)**

(54) **Pegelstandanzeigeeinrichtung für einen Wasservorratsbehälter von Haushaltsgeräten.**

(57) Zum Erkennen des Pegelstandes (20) weist die Pegelstandanzeigeeinrichtung ein Schauglas (2) auf, zu deren der Flüssigkeit Zugewandten Innenseite (16) mit einem gewissen Abstand eine ebenfalls von der Flüssigkeit benetzbare Wand (6) verläuft. Die Wand (6) weist mindestens ein Anzeigeelement (19) auf, welches bei entsprechendem Pegelstand (20) durch das Schauglas (2) deutlich erkennbar wird.

Nach der Erfindung ist die Oberflächenstruktur an der Innenseite (16) des Schauglases (2) zur Bildung einer Streuscheibe gezielt uneben ausgebildet, wobei der Brechungsindex des Materials des Schauglases (2) sich nur wenig von dem von Wasser unterscheidet. Die Unebenheit der Streuscheibe (2) wird in einem Ausführungsbeispiel durch auf die Innenseite (16) aufgebrachte Leisten (17) erzielt.

Fig. 1

EP 0 451 689 A2

Die Erfindung betrifft eine Pegelstandanzeigeeinrichtung für einen Wasservorratsbehälter von Haushaltsgeräten, insbesondere von Getränkezubereitungsmaschinen, Wasserkocher, Bügeleisen und Mundduschen, die zum Erkennen ihres Pegelstandes ein Schauglas aufweist, zu deren der Flüssigkeit zugewandten Innenseite mit einem gewissen Abstand eine ebenfalls von der Flüssigkeit benetzbare Wand verläuft, die mindestens ein Anzeigeelement aufweist, welches bei entsprechendem Flüssigkeitsspiegel durch das Schauglas deutlich erkennbar wird.

Eine derartige Pegelstandanzeigeeinrichtung ist bereits aus der DE-38 06 112 Al bekannt. Diese Pegelstandanzeigeeinrichtung besteht aus einem aus transparentem Material hergestellten und im Querschnitt kreisringförmigen Schaurohr, an dessen äußerer Mantelfläche im hinteren Bereich ein den Pegelstand anzeigendes Anzeigeolement in Form von auf einer Folie aufgedruckten Zahlen angebracht ist. Sobald in dem Schaurohr eine Wassersäule vorhanden ist, bildet dieser mit Wasser gefüllte Teil des Schaurohres eine optische Linse derart, daß die auf der Folie aufgedrunckten Zahlen, wenn ein Betrachter von vorne auf das Schaurohr sieht, vergrößert dargestellt sind. Der oberhalb der Wassersäule befindliche Folienabschnitt ist mit seinen Zahlen weiterhin verkleinert dargestellt. Dadurch soll zum einen eine gute Ablesbarkeit der Skala bzw. der Anzeigeelemente bis zur Höhe des Wasserstandes möglich sein und zum anderen soll der Pegelstand schnell erkennbar sein.

Ist bei diesem Ausführungsbeispiel aber der Wasservorratsbehälter vollständig gefüllt, das heißt, auch im Schaurohr steht die Wassersäule bis zum maximalen Füllstand, so wird die Skala über ihre gesamte Länge vergrößert dargestellt. In diesem Fall kann eine Bedienungsperson zwar die Skala ablesen, sie kann aber nicht feststellen, ob der Wassertank vollständig gefüllt oder vollständig leer ist, da ein Vergleich, nämlich ob es sich bei der vorliegenden Skala um eine vergrößerte oder um eine nicht vergrößerte Abbildung handelt, im Nachhinein nicht möglich ist. Dasselbe gilt sinngemäß für den Fall, daß das Schaurohr leer ist. Eine eindeutige Aussage über den Wasserstand im Wasservorratsbehälter ist also nur dann gegeben, wenn das Schaurohr nicht vollständig mit Wasser gefüllt ist; denn nur dann wird der Unterschied zwischen der normalen und der vergrößerten Abbildung deutlich sichtbar.

Aus der EP-0 159 149 Al ist weiterhin eine Pegelstandanzeigeeinrichtung bekannt, bei der die Oberflächenstruktur auf der Innenseite des Schauglases prismatisch, faserig oder beschichtet ausgebildet ist. Hierdurch soll ein deutlicher optischer Kontrast zwischen den nassen und nicht nassen Abschnitten an der Innenseite des Schauglases erreicht werden. Zwar kann durch diese Maßnahme der Pegelstand des Wassers besser erkannt werden, durch die Anbringung von Markierungen an der Vorderseite des Schauglases wird aber die Ablesbarkeit des Füllstandes nachteilig beeinträchtigt, da, wenn nämlich der Pegelstand des Wassers genau auf eine parallel zum Pegelstand verlaufende Markierung fällt, der Pegelstand von der davorliegenden Markierung verdeckt wird. Aber auch dann, wenn sich der Pegelstand von klarem Wasser zwischen zwei Markierungen befindet, muß eine Bedienungsperson länger suchen, bis sie den Pegelstand erkennt, da die Markierungen wesentlich kontrastreicher sind als die durchsichtige Wassersäule und daher deren Pegel vergleichsweise schlecht erkennbar ist.

Aufgabe der Erfindung ist es daher, eine Pegelstandanzeigeeinrichtung zu schaffen, durch die eine Bedienungsperson einen noch deutlicheren Unterschied zwischen den vom Wasser benetzten und nicht benetzten Anzeigeelementen wahrnehmmen kann.

Diese Aufgabe wird erfindungsgemäß dadurch gelöst, daß die Oberflächenstruktur auf der Innenseite des Schauglases zur Bildung einer Streuscheibe gezielt uneben ausgebildet ist und daß der Brechungsindex des Materials des Schauglases sich nur wenig von dem von Wasser unterscheidet. Durch die erfindungsgemäße Pegelstandanzeigeeinrichtung werden bei einem vorhandenen Pegelstand überhaupt nur die Anzeigeelemente sichtbar, die bis zur Höhe des Pegelstandes an der Wand ausgebildet sind. Um dabei eine möglichst verzerrungsfreie und klare Abbildung der Anzeigeelemente bis zum Pegelstand zu erhalten, darf der Brechungsindex des Material des Schauglases sich nur wenig von dem von Wasser unterscheiden.

Die erfindungsgemäße Pegelstandanzeigeeinrichtung hat den großen Vorteil, daß eine Bedienungsperson keinen Vergleich darüber anstellen muß, in welcher Größe beispielsweise die Anzeigeelemente bei leerem oder bei gefülltem Wasservorratsbehälter abgebildet werden. Ebenso braucht eine Bedienungsperson nicht lange suchen, bis sie den Pegelstand auf der Meßskala gefunden hat. Nach der Erfindung werden nämlich die Anzeigeelemente erst dann in dem Bereich sichtbar bzw. scharf abgebildet, in dem sich die Wassersäule befindet, also nur bis zur Höhe des vorhandenen Pegelstandes. Die oberhalb des Pegelstandes an der Wand ausgebildeten Anzeigeelemente sind weiterhin nicht sichtbar. Somit kann eine Bedienungsperson in kürzester Zeit den Pegelstand äußerst einfach und exakt feststellen.

Ist hingegen kein Wasserpegel in der Pegelstandanzeigeeinrichtung vorhanden, so wird ein Teil des über die Streuscheibe von außen einfallende Licht an der mit den Anzeigeelementen versehenen Wand reflektiert und zur Innenseite der Streuscheibe umgelenkt, von wo es dann aufgrund der Unebenheit an der Innenseite des Schauglases von dieser wieder so reflektiert wird, daß von der Wand nach außen nahezu keine Abbildung gelangt, die die Meßskala deutlich erkennen läßt. Aus diesem Grunde kann ein Betrachter, der von außen auf das Schauglas schaut, nicht erkennen, was sich hinter dem Schauglas befindet.

Sobald sich aber zwischen der Innenseite des Schauglases und der mit den Anzeigeelementen versehenen Wand Wasser befindet, also beide Oberflächen von Wasser benetzt sind, wirkt die Streuscheibe zusammen mit der Wassersäule wie eine einteilige durchsichtige Wasser- bzw. Glaswand, ohne daß die Unebenheiten an der Innenseite des Schauglases zur Wirkung kommen. Der Betrachter erkennt nun, wenn er von außen auf das Schauglas schaut, deutlich die an der Wand ausgebildeten Anzeigeelemente, so, als würde er ohne Hindernis direkt auf diese Wand schauen.

In einer Weiterbildung der Erfindung ist vorgesehen, daß die Oberfläche der Innenseite der Streuscheibe von parallel zueinander und parallel zur Längsrichtung des Schauglases verlaufenden Erhebungen in Form von einzelnen Leisten gebildet wird. Hierdurch wird es möglich, daß die einzelnen Schaugläser aus einem im Extrudierverfahren endlos hergestellten Streifen abgetrennt werden. Dies läßt die Herstellung der Schaugläser besonders kostengünstig werden. Die an der Innenseite des Schauglases ausgebildeten Leisten reflektieren das auf sie auffallende Licht derart, daß das Schauglas fast undurchsichtig wird. Sind die Leisten so ausgebildet, daß an der Innenseite der Streuscheibe eine wellen-, zinnen-, zacken- oder prismaförmige Oberfläche entsteht, so kann das die Streuscheiben bildende Streifenmaterial bei unterschiedlichem Aussehen der Streuscheiben ebenfalls extrudiert werden.

Um den Pegelstand besonders leicht ablesen zu können, sind die Anzeigeelemente durch parallel zueinander verlaufende Striche gebildet und die Striche verlaufen bei ordnungsgemäß aufgestelltem Haushaltsgerät parallel zur Wasseroberfläche. Durch die senkrecht zu den Anzeigeelementen verlaufenden Leisten werden die Anzeigeelemente in dem Bereich des vorhandenen Pegelstandes besonders deutlich hervorgehoben, da der Wechsel von den senkrecht zum Pegelstand verlaufenden Leisten zu den parallel zum Pegelstand verlaufenden Anzeigeelementen für einen Beobachter besonders auffällig und unterscheidend ist.

Damit die Pegelstandanzeigeeinrichtung unabhängig vom Ort des Wasservorratsbehälters aufgestellt werden kann, sind die Streuscheibe und die Wand so über Seitenwände miteinander verbunden, daß ein Schaurohr gebildet wird und daß das Schaurohr an seinem unteren Ende über eine Verbindungsleitung mit dem Wasservorratsbehälter und an seinem oberen Ende mit der Atmosphäre verbunden ist. Bildet dabei das Schaurohr im Querschnitt einen Vierkant und ist die Wand mit den beiden Seitenwänden lösbar verbunden, so kann zum einen das Schaurohr leicht gereinigt und zum anderen der vom Schauglas und den Seitenwänden gebildete, im Querschnitt U-förmige Abschnitt ebenfalls im Extrudierverfahren hergestellt werden.

Es ist vorteilhaft, daß die Anzeigeelemente direkt an der der Innenseite der Streuscheibe zugewandten Oberfläche der Wand, beispielsweise durch Einritzen oder Färben von Markierungsstrichen, ausgebildet sind und daß auch die Seitenwände aus transparentem Material bestehen. Hierdurch läßt sich die Wand einfach und leicht herstellen. Durch die transparenten Seitenwände fällt nun auch von der Seite Licht auf die Wand, das unter anderem auch zur Streuscheibe reflektiert wird, so daß die Anzeigeelemente im Bereich des vorliegenden Pegelstandes heller, deutlicher und klarer erkennbar sind.

Werden die Anzeigeelemente von Zahlen gebildet, so ist es vorteilhaft, wenn diese in Abhängigkeit von der Größe des Wasservorratsbehälters soweit voneinander entfernt sind, daß jeweils ein Abschnitt von einer zur anderen Zahl beispielsweise einer Tasse für Kaffee oder für Tee entspricht. Als besonders kostengünstiges, bruchsicheres und leicht herzustellendes Schauglas hat sich glasartiges, durchsichtiges Plexiglas bewährt, das in seinen optischen Eigenschaften nahezu denen von Glas entspricht.

Ein Ausführungsbeispiel der Erfindung ist in der Zeichnung dargestellt und wird im folgenden näher dargestellt.

Es zeigen:

Fig. 1    Draufsicht auf ein Schauglas eines Schaurohres nach der Erfindung,

Fig. 2    Schnitt quer zur Längsrichtung des Schaurohres gemäß der Schnittführung II-II nach Fig. 1 und

Fig. 3    perspektivische Ansicht in den Innenraum des Schaurohres gemäß der Pfeilrichtung X nach Fig. 2, wobei jedoch die Seitenwände nach Fig. 2 den Boden und den Deckel bilden und anstelle der Rückwand das Schauglas in das u-förmige Rückwandprofil eingesetzt ist.

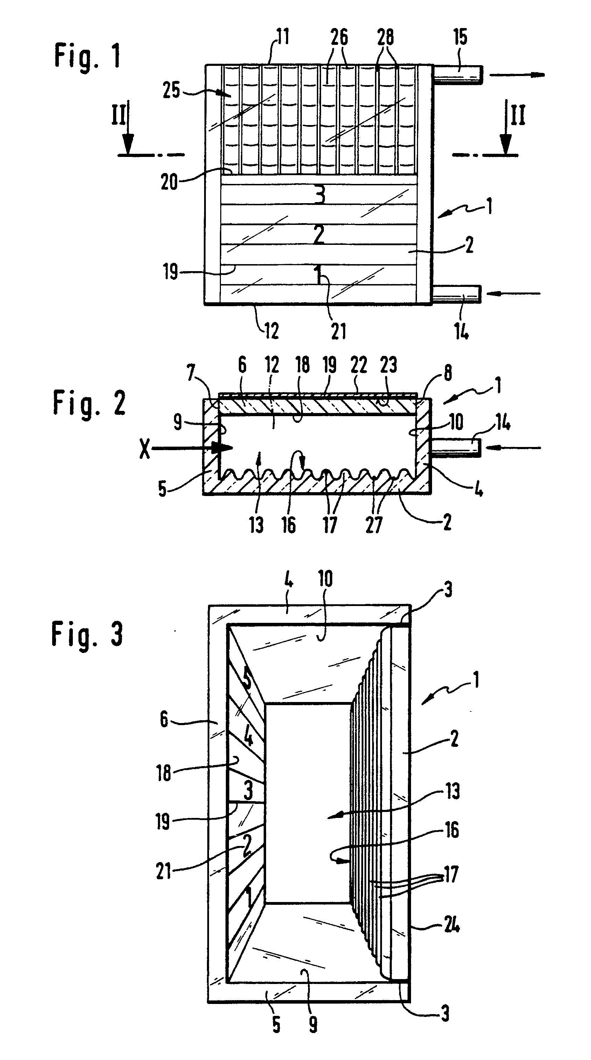

In den Fign. 1 bis 3 besteht das Schaurohr 1 aus einem aus transparentem Material, beispielsweise Plexiglas oder Quarzglas, hergestellten Schauglas 2, an deren Stirnseiten 3 sich nach Fig. 3 parallel zueinander und im rechten Winkel zum Schauglas 2 verlaufende Seitenwände 4, 5 anschließen.

Nach Fig. 2 bilden die Seitenwände 4, 5 mit dem Schauglas 2 eine einteilige, im Querschnitt u-förmige Gestalt. In Fig. 3 liegen die Seitenwände 4, 5 stumpf an der Stirnseite 3 an und sind beispielsweise durch Verkleben mittels eines Einkomponentensilikonklebers fest miteinander verbunden.

Nach Fig. 3 schließt sich links an die beiden Seitenwände 4, 5 eine parallel zum Schauglas 2 verlaufende Wand 6 an, die einteilig mit den Seitenwänden 4, 5 verbunden ist und somit mit den Seitenwänden 4, 5 ein u-förmiges Profil bildet, das beispielsweise im Extruder- oder auch im Preßverfahren hergestellt werden kann. In Fig. 2 ist das aus dem Schauglas 2 und den Seitenwänden 4, 5 bestehende, u-förmige Profil von seiner offenen Seite her durch eine Wand 6 verschlossen. Die die Wand 6 seitlich begrenzenden Abschlußflächen 7, 8 liegen stumpf an den zueinander zugewandten Innenflächen 9, 10 der Seitenwände 4, 5 an und sind mit diesen ebenfalls verklebt.

Nach den Fign. 2 und 3 kann selbstverständlich auch die Wand (Fig. 2) bzw. das Schauglas 2 (Fig. 3) über in der Zeichnung nicht dargestellte Rast- und Dichtelemente mit den Seitenwänden 4, 5 lösbar und dicht verbunden sein, damit bei evtl. Verschmutzung des Schauglases 2 und der Wand 6 diese nach ihrer Demontage von Innen her gesäubert werden können.

In den Fign. 1 und 2 sind die Ober- und Unterseite 11, 12 des Schaurohres 1 durch je einen Deckel dichtend verschlossen, die aber in der Zeichnung nicht dargestellt sind. Somit bildet das Schauglas 2 mit den Seitenwänden 4, 5, der Wand 6 und den Deckeln eine geschlossene Kammer 13, die an der Unterseite ein Einlaßrohr 14 und an der Oberseite ein Auslaßrohr 15 aufweist. Während das Auslaßrohr 15 zur Entlüftung der Kammer 13 dient, wird das Einlaßrohr 14 über eine Rohrleitung mit einem in der Zeichnung nicht dargestellten Wasservorratsbehälter verbunden, dessen Pegelstand überprüft werden soll.

In den Fign. 2 und 3 sind an der Innenseite 16 des Schauglases 2 Unebenheiten in Form von parallel zueinander und parallel zur Längsrichtung des Schauglases verlaufenden Leisten 17 ausgebildet, durch die das Schauglas 2 in Luftumgebung zu einer Streuscheibe wird. Die in den Fign. 1 bis 3 dargestellte Streuscheibe weist an ihrer Innenseite 16 Leisten 17 mit wellenförmigem Querschnitt auf.

An der der Innenseite 16 der Streuscheibe 2 zugewandten Oberfläche 18 der Wand 6 sind nach Fig. 3 Anzeigeelemente oder Markierungen 19 in Form von senkrecht zu den Leisten 17 verlaufenden Strichen angebracht, die bei ordnungsgemäß aufgestellter Pegelstandanzeigeeinrichtung und bei teilweise mit Wasser gefüllter Kammer 13 parallel zum Pegelstand 20 (Fig. 1) verlaufen. Um die Ablesbarkeit des Pegelstandes 20 zu erleichtern, können noch Zahlen 21 an der Oberfläche 18 der Wand 6 angebracht sein.

Wie aus Fig. 3 deutlich hervorgeht, bilden die Seitenwände 4 und 5 den Deckel bzw. den Boden und die Deckelteile (nicht dargestellt) die Seitenflächen des Schaurohres 1. Dies hängt davon ab, wie die in Form von Strichen ausgebildeten Anzeigeelemente 19 zu den Seitenwänden 4, 5 verlaufen.

Wie aus Fig. 2 hervorgeht, sind die Anzeigeelemente 19 auf einer Folie 22 ausgebildet, die dann von außen her auf die Rückseite 23 der Wand 6 angebracht ist. Damit man die Markierungen 19 auch von der Außenseite 24 der Streuscheibe 2 erkennen kann, muß selbstverständlich die Wand 6 ebenfalls transparent und mit planparallelen, glatten Oberflächen 23, 18 versehen sein.

Die Wirkungsweise der erfindungsgemäßen Pegelstandanzeigeeinrichtung ist folgende:

Befindet sich in der Kammer 13 des Schaurohres 1 kein Wasser, so wird das von außen in die Kammer 13 eindringende Licht an den Leisten 17 derart gestreut, daß die an der Wand 6 ausgebildeten, horizontal verlaufenden Striche 19 als ein schuppen- bzw. dachziegelförmiges und kaum sichtbares Bild 25 wiedergegeben wird. Dabei werden die Schuppen 26 von den Leisten 17 gebildet, während an den tiefsten Stellen 27 (Fig. 2), also am Übergang zweier Leisten 17 verspiegelte Streifen 28 entstehen, so daß in diesem Bereich die Anzeigeelemente garnicht wiedergegeben werden.

Wird nun Wasser über das Einlaßrohr 14 in die Kammer 13 bis zu einem beliebigen Pegelstand 20 eingelassen, so werden die Markierungen 19 bis zum Pegelstand 20 deutlich sichtbar, da nun dieser Abschnitt der Streuscheibe 2 mit der Wassersäule bis zur Wand 6 wie eine einteilige planparallele Glasscheibe wirkt, deren Dicke sich von der Außenseite 24 des Schauglases 2 bis zur Oberfläche 18 der Wand 6 erstreckt. Das die unebene Innenseite 16 des Schauglases 2 benetzende Wasser füllt alle Vertiefungen der Leisten 17 aus, so daß das von der Wand 6 reflektierte Licht geradlinig und ohne Streuung aus dem Schauglas 2 austreten kann. Selbstverständlich ist es auch möglich, die Leisten 17 noch stärker an der Innenseite 16 des Schauglases 2 hervorheben zu lassen oder im anderen Fall auch Schuppen, Noppen oder prismaförmige Erhebungen an der Innenseite 16 des Schauglases 2 auszubilden, um die Streuwirkung der Streuscheibe 2 noch stärker zu erhöhen, so daß die Markierungen 19 an der Wand 6 bei leerem Schaurohr überhaupt nicht mehr sichtbar sind.

**Patentansprüche**

1.     Pegelstandanzeigeeinrichtung für einen Wasservorratsbehälter von Haushaltsgeräten, insbesondere von Getränkezubereitungsmaschinen, Wasserkocher, Bügeleisen und Mundduschen, die zum Erkennen ihres Pegelstandes ein Schauglas (2) aufweist, zu deren der Flüssigkeit zugewandten Innenseite (16) mit einem gewissen Abstand eine ebenfalls von der Flüssigkeit benetzbare Wand (6) verläuft, die mindestens ein Anzeigeelement (19, 21) aufweist, welches bei entsprechendem Flüssigkeitspegel (20) durch das Schauglas (2) deutlich erkennbar wird,
**dadurch gekennzeichnet,**
daß die Oberflächenstruktur auf der Innenseite (16) des Schauglases (2) zur Bildung einer Streuscheibe gezielt uneben ausgebildet ist und daß der Brechungsindex des Materials des Schauglases (2) sich nur wenig von dem von Wasser unterscheidet.

2. Pegelstandanzeigeeinrichtung nach Anspruch 1,
**dadurch gekennzeichnet,**
daß die Oberfläche der Innenseite (16) der Streuscheibe (2) von parallel zueinander und parallel zur Längsrichtung des Schauglases verlaufenden Erhebungen in Form von einzelnen Leisten (17) gebildet wird.

3. Pegelstandanzeigeeinrichtung nach Anspruch 2,
**dadurch gekennzeichnet,**
daß die Leisten (17) so ausgebildet sind, daß an der Innenseite (16) der Streuscheibe (2) eine wellen-, zinnen-, zacken- oder prismaförmige Oberfläche entsteht.

4. Pegelstandanzeigeeinrichtung nach Anspruch 2,
**dadurch gekennzeichnet,**
daß die Anzeigeelemente (19, 21) parallel zueinander verlaufende Striche (19) aufweisen und daß die Striche (19) bei ordnungsgemäß aufgestelltem Haushaltsgerät parallel zur Wasseroberfläche (20) verlaufen.

5. Pegelstandanzeigeeinrichtung nach Anspruch 1,
**dadurch gekennzeichnet,**
daß die Streuscheibe (2) und die Wand (6) so über Seitenwände (4, 5) miteinander verbunden sind, daß ein Schaurohr (1) gebildet wird und daß das Schaurohr (1) an seinem unteren Ende über eine Verbindungsleitung (14) mit dem Wasservorratsbehälter und das obere Ende mit der Atmosphäre verbunden ist.

6. Pegelstandanzeigeeinrichtung nach Anspruch 5,
**dadurch gekennzeichnet,**
daß die Anzeigeelemente (19, 21) direkt an der der Innenseite (16) der Streuscheibe (2) zugewandten Oberfläche (18) der Wand (6), beispielsweise durch Einritzen oder Färben von Markierungsstrichen (19), ausgebildet sind und daß die Seitenwände (4, 5) aus transparentem Material bestehen.

7. Pegelstandanzeigeeinrichtung nach Anspruch 5,
**dadurch gekennzeichnet,**
daß das Schaurohr (1) im Querschnitt ein Vierkant bildet und daß die Wand (6) mit den beiden Seitenwänden (4, 5) lösbar verbunden ist.

8. Pegelstandanzeigeeinrichtung nach Anspruch 1,
**dadurch gekennzeichnet,**
daß die Anzeigelemente (19, 21) Zahlen (21) enthalten.

9. Pegelstandanzeigeeinrichtung nach Anspruch 1,
**dadurch gekennzeichnet,**
daß die Wand (6) auf ihrem gesamten Verlauf sowohl gegenüber dem Wasser als auch gegenüber dem Schauglas (2) farblich abgesetzt ist.

10. Pegelstandanzeigeeinrichtung nach Anspruch 1,
**dadurch gekennzeichnet,**
daß das Schauglas (2) aus glasartigem, durchsichtigen Polymethacrylsäureester (Plexiglass) besteht.

Fig. 1

Fig. 2

Fig. 3